(19) Europäisches Patentamt
European Patent Office
Office européen des brevets

(11) **EP 1 806 867 A2**

(12) **EUROPEAN PATENT APPLICATION**

(43) Date of publication:
**11.07.2007 Bulletin 2007/28**

(51) Int Cl.:
**H04L 1/16** *(2006.01)*  **H04B 1/713** *(2006.01)*
**H04B 7/26** *(2006.01)*  **H04J 3/00** *(2006.01)*
**H04L 27/26** *(2006.01)*

(21) Application number: **07000358.7**

(22) Date of filing: **09.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.01.2006 KR 20060002192**
**06.04.2006 KR 20060031632**

(71) Applicant: **Samsung Electronics Co., Ltd.**
**Yeongtong-gu**
**Suwon-si, Gyeonggi-do (KR)**

(72) Inventors:
• **Kwak, Yong-Jun**
**Yeongtong-gu**
**Suwon-si**
**Gyeonggi-do (JP)**

• **Lee, Ju-Ho**
**Yeongtong-gu**
**Suwon-si**
**Gyeonggi-do (JP)**
• **Cho, Joon-Young**
**Yeongtong-gu**
**Suwon-si**
**Gyeonggi-do (JP)**
• **Cho, Yun-Ok**
**Yeongtong-gu**
**Suwon-si**
**Gyeonggi-do (JP)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for time multiplexing uplink data and uplink signaling information in a SC-FDMA system**

(57) Provided is a method and an apparatus for transmitting uplink information items having various characteristics by using a single FFT block. The method includes determining if there is uplink signaling information to be transmitted when there is uplink data to be transmitted; time multiplexing the uplink data and a first pilot for the uplink data and transmitting the multiplexed uplink data and first pilot, when there is no uplink signaling information; and time multiplexing the uplink data, the first pilot for the uplink data, and a second pilot for the uplink data and the uplink signaling information, and transmitting the multiplexed uplink data, first pilot, and second pilot, when there is the uplink signaling information.

FIG.8

**Description**

**BACKGROUND OF THE INVENTION**

1. Field of the Invention

The present invention relates to a method and an apparatus for transmitting/receiving uplink signaling information and uplink data in a Frequency Division Multiple Access (FDMA) wireless communication system using a single carrier.

2. Description of the Related Art

Recently, active research is being conducted in an Orthogonal Frequency Division Multiplexing (OFDM) scheme or a Single Carrier-Frequency Division Multiple Access (SC-FDMA) scheme similar to the OFDM scheme as a scheme available for high speed data transmission through a wireless channel in a mobile communication system.

The OFDM scheme, which transmits data using multiple carriers, is a special type of a Multiple Carrier Modulation (MCM) scheme in which a serial symbol sequence is converted into parallel symbol sequences, and the parallel symbol sequences are modulated with a plurality of mutually orthogonal subcarriers (or subcarrier channels) before being transmitted.

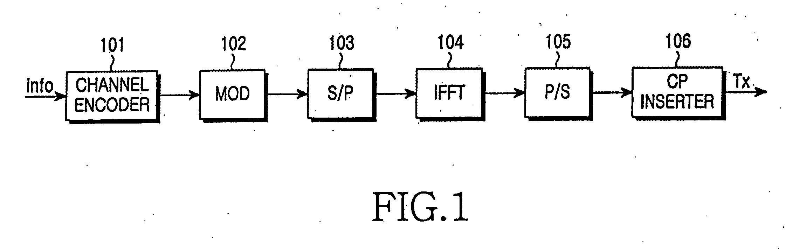

FIG. 1 is a block diagram illustrating a structure of a transmitter of a typical OFDM system.

Referring to FIG. 1, the OFDM transmitter includes a channel encoder 101, a modulator 102, a serial-to-parallel converter 103, an Inverse Fast Fourier Transform (IFFT) block or a Digital Fourier Transform (DFT) block 104, a parallel-to-serial converter 105, and a Cyclic Prefix (CP) inserter 106.

The channel encoder 101 receives and channel-encodes an input information bit sequence. In general, a convolutional encoder, a turbo encoder, or a Low Density Parity Check (LDPC) encoder is used as the channel encoder 101. The modulator 102 modulates the channel-encoded bit sequence according to a modulation scheme, such as a Quadrature Phase Shift Keying (QPSK) scheme, 8PSK scheme, 16-ary Quadrature Amplitude Modulation (16QAM) scheme, 64QAM, 256QAM, etc. Although not shown in FIG. 1, it is obvious that a rate matching block for performing repetition and puncturing may be inserted between the channel encoder 101 and the modulator 102.

The serial-to-parallel converter 103 receives output data from the modulator 102 and converts the received data into parallel data. The IFFT block 104 receives the parallel data output from the serial-to-parallel converter 103 and performs an IFFT operation on the parallel data. The data output from the IFFT block 104 is converted to serial data by the parallel-to-serial converter 105. The CP inserter 106 inserts a Cyclic Prefix (CP) into the serial data output from the parallel-to-serial converter 105, thereby generating an OFDM symbol to be transmitted.

The IFFT block 104 converts the input data of the frequency domain to output data of the time domain. In the case of a typical OFDM system, because input data is processed in the frequency domain, a Peak to Average Power Ratio (PAPR) of the data may increase when the data has been converted into the time domain.

The PAPR is one of the most important factors to be considered in the uplink transmission. As the PAPR increases, the cell coverage decreases, so that the signal power required by a User Equipment (UE) increases. Therefore, it is necessary to first reduce the PAPR, and it is thus possible to use an SC-FDMA scheme, which is a scheme modified from the typical OFDM scheme, for the OFDM-based uplink transmission. It is possible to effectively reduce the PAPR by enabling processing in the time domain without performing processing (channel encoding, modulation, etc.) of data in the frequency domain.

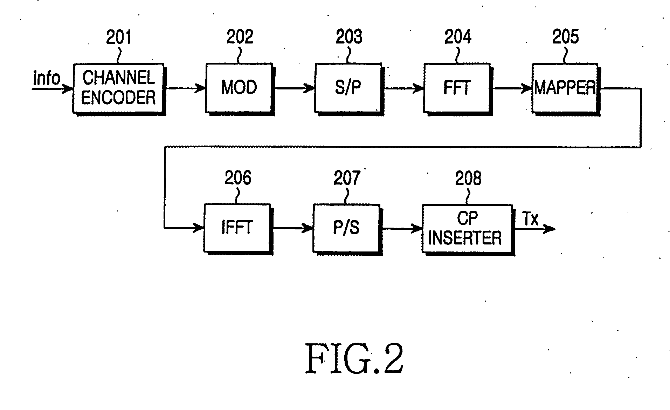

FIG. 2 is a block diagram illustrating a structure of a transmitter in a system employing an SC-FDMA scheme, which is a typical uplink transmission scheme.

Referring to FIG. 2, the SC-FDMA transmitter includes a channel encoder 201, a modulator 202, a serial-to-parallel converter 203, a Fast Fourier Transform (FFT) block 204, a sub-carrier mapper 205, an IFFT block 206, a parallel-to-serial converter 207, and a CP inserter 208.

The channel encoder 201 receives and channel-encodes an input information bit sequence. The modulator 202 modulates the output of the channel encoder 201 according to a modulation scheme, such as a QPSK scheme, an 8PSK scheme, a 16QAM scheme, a 64QAM scheme, a 256QAM scheme, etc. A rate matching block (not shown) may be included between the channel encoder 201 and the modulator 202.

The serial-to-parallel converter 203 receives data output from the modulator 202 and converts the received data into parallel data. The FFT block 204 performs an FFT operation on the data output from the serial-to-parallel converter 203, thereby converting the data into data of the frequency domain. The sub-carrier mapper 205 maps the output data of the FFT block 204 to the input of the IFFT block 206. The IFFT block 206 performs an IFFT operation on the data output from the sub-carrier mapper 205. The output data of the IFFT block 206 is converted to parallel data by the parallel-to-serial converter 207. The CP inserter 208 inserts a CP into the parallel data output from the parallel-to-serial converter 207, thereby generating an OFDM symbol to be transmitted.

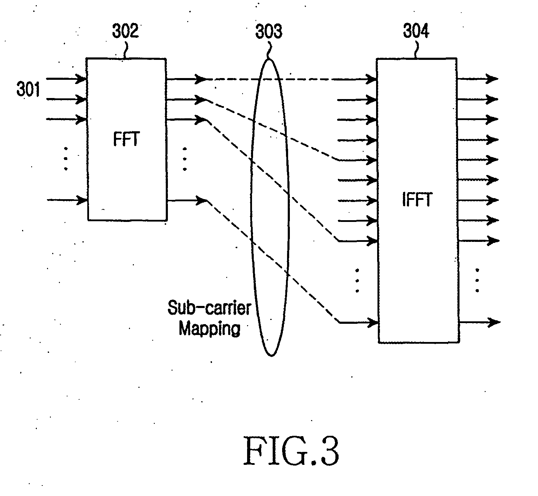

FIG. 3 is a block diagram illustrating in more detail the structure for resource mapping shown in FIG. 2. Hereinafter, the operation of the sub-carrier mapper 205 will be described with reference to FIG. 3.

Referring to FIG. 3, data symbols 301 having been subjected to the channel encoding and modulation are input to an FFT block 302. The output of the FFT block 302 is input to an IFFT block 304. At this time, a sub-carrier mapper 303 maps the output data of the FFT block 302 to the input data of the IFFT block 304.

The sub-carrier mapper 303 maps the information symbols of the frequency domain data converted by the FFT block 302 to corresponding input points or input taps of the IFFT block 304 so that the information symbols can be carried by proper sub-carriers.

During the mapping procedure, if the output symbols of the FFT block 302 are sequentially mapped to neighboring input points of the IFFT block 304, the output symbols are transmitted by sub-carriers that are consecutive in the frequency domain. This mapping scheme is referred to as a Localized Frequency Division Multiple Access (LFDMA) scheme.

Further, when the output symbols of the FFT block 302 are mapped to input points of the IFFT block 304 having a predetermined interval between them, the output symbols are transmitted by sub-carriers having equal intervals between them in the frequency domain. This mapping scheme is referred to as either an Interleaved Frequency Division Multiple Access (IFDMA) scheme or a Distributed Frequency Division Multiple Access (DFDMA) scheme.

Although FIGs. 2 and 3 show one method of implementing the SC-FDMA technology in the frequency domain, it is also possible to use various other methods, such as a method of implementing the technology in the time domain.

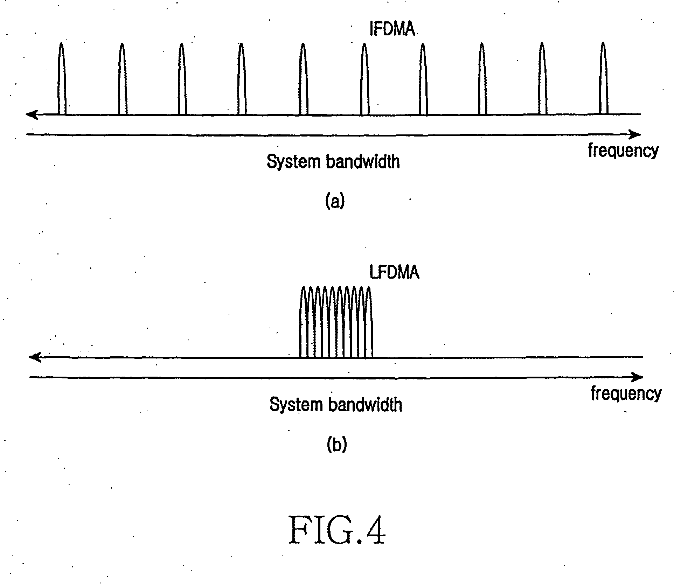

Diagrams (a) and (b) of FIG. 4 illustrates comparison between the positions of sub-carriers used for the DFDMA and the LFDMA in the frequency domain.

Referring to diagram (a) of FIG. 4, the transmission symbols of a UE using the DFDMA scheme are distributed with equal intervals over the entire frequency domain (that is, the system band). Referring to diagram (b) of FIG. 4, the transmission symbols of a UE using the LFDMA scheme are consecutively located at some part of the frequency domain.

According to the LFDMA scheme, because consecutive parts of the entire frequency band are used, it is possible to obtain a frequency scheduling gain by selecting a partial frequency band having good channel gain in the frequency selective channel environment in which severe channel change of frequency bands occurs. In contrast, according to the DFDMA scheme, it is possible to obtain a frequency diversity gain as transmission symbols have various channel gains by using a large number of sub-carriers distributed over a wide frequency band.

In order to maintain the characteristic of the single carrier as described above, simultaneously transmitted information symbols should be mapped to the IFFT block such that they can always satisfy the LFDMA or DFDMA after passing through a single FFT block (or DFT block).

In an actual communication system, various information symbols may be transmitted. For example, in the uplink of a Long Term Evolution (LTE) system using the SC-FDMA based on a Universal Mobile Telecommunications System (UMTS), uplink data, control information regulating a transport scheme of the uplink data (which includes Transport Format (TF) information of the uplink data and/or Hybrid Automatic Repeat reQuest (HARQ) information), ACK/NACK for an HARQ operation for downlink data, Channel Quality Indication (CQI) information indicating the channel status reported to be used for scheduling of a node B, etc. may be transmitted. These enumerated information items have different transmission characteristics.

Uplink data can be transmitted in a situation in which a UE has data in a transmission buffer of the UE and has received permission for uplink transmission from a node B. The control information regulating the transport scheme of the uplink data is transmitted only when the uplink data is transmitted. Sometimes, uplink data may be transmitted without transmission of control information. In contrast, the ACK/NACK, which is transmitted in response to downlink data, has no relation to the transmission of the uplink data. That is, either both the uplink data and the ACK/NACK may be simultaneously transmitted or only one of them may be transmitted. Further, the CQI, which is transmitted at a given time, also has no relation to the transmission of the uplink data. That is, either both the uplink data and the CQI may be simultaneously transmitted or only one of them may be transmitted.

As described above, various types of uplink information are transmitted in the SC-FDMA system. Under the restriction of use of a single FFT block, which is a characteristic of the single sub-carrier, it is necessary to effectively control the transmission of information in order to transmit various types of information as described above. That is to say, it is necessary to arrange a specific transmission rule for each of the cases where only uplink data is transmitted, where only ACK/NACK or CQI is transmitted, and where both uplink data and uplink signaling information (ACK/NACK or CQI) are transmitted.

## SUMMARY OF THE INVENTION

Accordingly, the present invention has been made to solve the above-mentioned problems occurring in the prior art, and provides a method and an apparatus for transmitting various types of uplink information having various characteristics by using a single FFT block.

The present invention also provides a method and an apparatus for time multiplexing uplink data and uplink signaling information.

The present invention also provides a method and an apparatus for transmitting an additional pilot signal necessary for the transmission of uplink signaling information.

In order to accomplish this object, there is provided a method for transmitting multiple types of uplink information in a Single Carrier Frequency Division Multiple Access (SC-FDMA) wireless communication system, the method including, when there is uplink data to be transmitted, determining if there is uplink signaling information to be transmitted; when there is no uplink signaling information, time-multiplexing the uplink data and a first pilot for the uplink data and transmitting the multiplexed uplink data and first pilot; and when there exists the uplink signaling information, time-multiplexing the uplink data, the first pilot for the uplink data, and a second pilot for the uplink data and the uplink signaling information, and transmitting the multiplexed uplink data, first pilot, and second pilot.

In accordance with another aspect of the present invention, there is provided an apparatus for transmitting multiple types of uplink information in a Single Carrier Frequency Division Multiple Access (SC-FDMA) wireless communication system, the apparatus including a multiplexer for time multiplexing uplink data and a first pilot for the uplink data when there is uplink data to be transmitted and there is no uplink signaling information, and time multiplexing the uplink data, the first pilot for the uplink data, and a second pilot for the uplink data and the uplink signaling information when there is both the uplink signaling information and the uplink signaling information; and a resource mapper for transmitting an output of the multiplexer after mapping the output of the multiplexer to a frequency resource.

In accordance with another aspect of the present invention, there is provided a method for receiving multiple types of uplink information in a Single Carrier Frequency Division Multiple Access (SC-FDMA) wireless communication system, the method including receiving from a UE a radio signal through a frequency resource; time-demultiplexing the radio signal into uplink data related signal, a first pilot, uplink signaling related signal, and a second pilot; channel-compensating the uplink data related signal by using the first pilot; decoding the channel-compensated uplink data related signal and outputting uplink data; channel-compensating the uplink signaling related signal by using the second pilot; and decoding the channel-compensated uplink signaling related signal and outputting uplink signaling information. In accordance with another aspect of the present invention, there is provided an apparatus for receiving multiple types of uplink information in a Single Carrier Frequency Division Multiple Access (SC-FDMA) wireless communication system, the apparatus including a receiver block for receiving from a UE a radio signal through a frequency resource; a first demultiplexer for time-demultiplexing the radio signal into uplink data related signal, a first pilot, uplink signaling related signal, and a second pilot; a first channel estimator/compensator for channel-compensating the uplink data related signal by using the first pilot; a first channel decoder for decoding the channel-compensated uplink data related signal and outputting uplink data; a second channel estimator/compensator for channel-compensating the uplink signaling related signal by using the second pilot; and a second channel decoder for decoding the channel-compensated uplink signaling related signal and outputting uplink signaling information.

**BRIEF DESCRIPTION OF THE DRAWINGS**

The above and other objects, features and advantages of the present invention will be more apparent from the following detailed description taken in conjunction with the accompanying drawings, in which:

FIG. 1 is a block diagram illustrating a structure of a transmitter of a typical OFDM system;
FIG. 2 is a block diagram illustrating a structure of a transmitter in a system employing an SC-FDMA scheme, which is a typical uplink transmission scheme;
FIG. 3 is a block diagram illustrating in more detail the structure for resource mapping shown in FIG. 2;
FIG. 4 is a diagram for comparing the positions of sub-carriers used for the DFDMA and the LFDMA in the frequency domain;
FIG. 5 illustrates structures of an uplink transmission frame and its sub-frame of an LTE system;
FIG. 6 illustrates frequency-time resources of an uplink transmission unit in an LTE system;
FIG. 7 is a signal flow diagram illustrating a process of signal transmission/reception between a node B and a UE;
FIG. 8 illustrates use of frequency-time resources according to the present invention;
FIG. 9 illustrate allocation of an additional pilot for uplink signaling information according to the present invention;
FIG. 10 is a block diagram illustrating a structure of a transmitter according to the present invention;
FIG. 11 is a block diagram illustrating a structure of a receiver according to the present invention;
FIG. 12 is a flow diagram of an operation of a transmitter according to the present invention;
FIG. 13 is a flow diagram of an operation of a receiver according to the present invention;
FIG 14 illustrates a structure of a sub-frame including a pilot additionally used for the CQI according to the present invention;

FIG. 15 is a block diagram illustrating a structure of a transmitter for time-multiplexing data and CQI according to the present invention;

FIG. 16 illustrates a structure of a receiver for receiving a radio signal transmitted by a transmitter according to the present invention;

FIG. 17 is a flow diagram of an operation of a transmitter according to the present invention; and

FIG. 18 is a flow diagram of an operation of a receiver according to the present invention.

## DETAILED DESCRIPTION OF THE PREFERRED EMBODIMENT

Hereinafter, preferred embodiments of the present invention will be described with reference to the accompanying drawings. In the following description, a detailed description of known functions and configurations incorporated herein will be omitted when it may make the subject matter of the present invention rather unclear. Further, in the following description of the present invention, various specific definitions are provided only to help general understanding of the present invention, and it is apparent to those skilled in the art that the present invention can be implemented without such definitions.

The present invention multiplexes different types of uplink information, so as to enable transmission of the uplink information, which can satisfy the single carrier characteristic in a wireless communication system using a Single Carrier Frequency Division Multiple Access (SC-FDMA) scheme. The following description discusses multiplexing for uplink transmission of uplink data, control information, ACK/NACK, CQI, etc. in an SC-FDMA wireless communication system. As used herein, the other information except for the uplink data and control information thereof, that is, information including ACK/NACK and CQI, is referred to as "uplink signaling information."

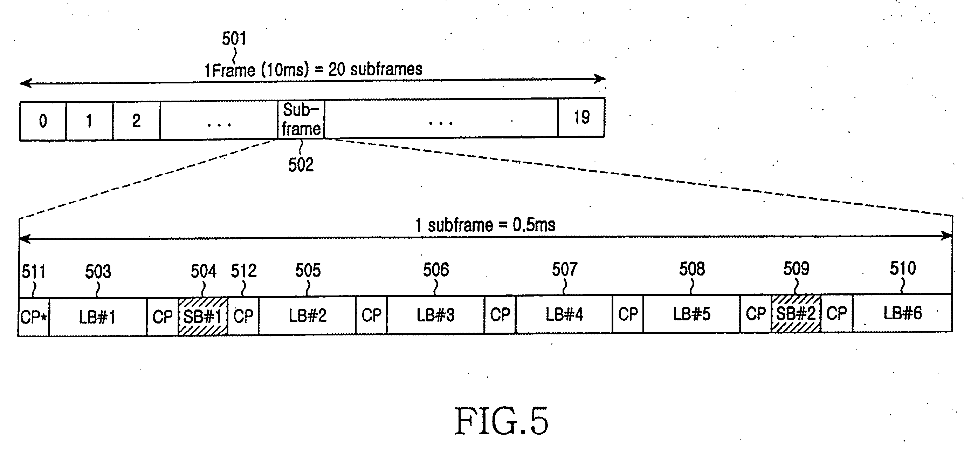

First, a Long Term Evolution (LTE) system, which is being standardized by the 3rd Generation Partnership Project (3GPP), is discussed in order to more clearly describe the present invention. The LTE system employs the SC-FDMA for uplink transmission. FIG. 5 illustrates structures of an uplink transmission frame and its sub-frame.

In FIG. 5, reference numeral 501 denotes a radio frame, which is an uplink transmission unit and is defined to have a length of 10 ms. One radio frame 501 includes 20 sub-frames 502, each of which has a length of 0.5 ms. Further, each sub-frame 502 includes six Long Blocks (LBs) 503, 505, 506, 507, 508 and 510, two Short Blocks (SBs) 504 and 509, and Cyclic Prefixes (CPs) 511 and 512 located before the blocks. The LBs 503, 505, 506, 507, 508 and 510 carry information except for pilot signals or pilots used as a reference for coherent modulation, and SBs 504 and 509 are used only to carry the pilots.

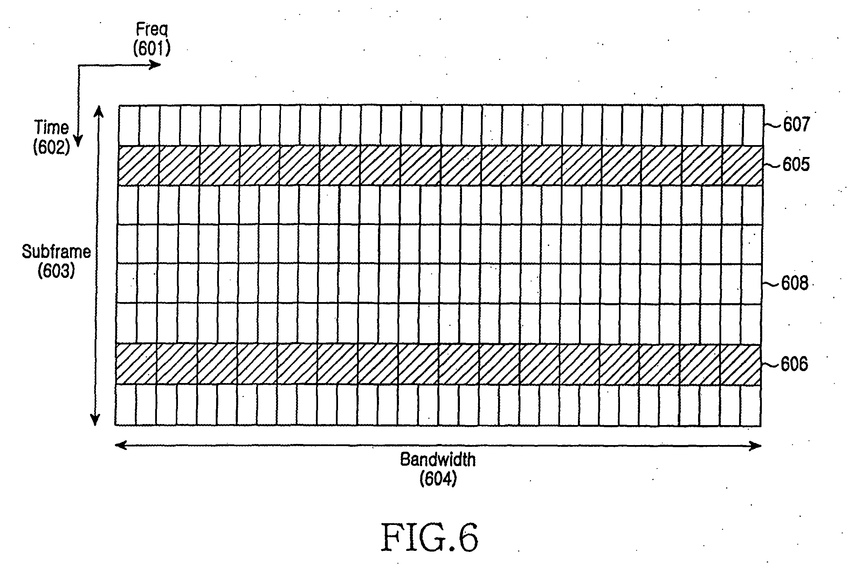

FIG. 6 illustrates the sub-frame 502 of FIG. 5 on the time domain and the frequency domain. In FIG. 6, the horizontal axis indicates the frequency domain 601 and the vertical axis indicates the time domain 602. The range of the frequency domain 601 corresponds to the entire frequency band 604 and the range of the time domain 602 corresponds to one sub-frame 603. As noted, the SBs 605 and 606 carry pilots, and the LBs 607 and 608 carry other information except for the pilots.

As described above, uplink data transmitted according to resource allocation by a node B, control information in relation to the uplink data, ACK/NACK for indicating success or failure in reception of downlink data, CQI for indicating a channel status, scheduling request information, etc. are transmitted by using the uplink resources.

Whether to transmit the uplink data is determined according to the scheduling of a node B, and a resource to be used is also determined according to the resource allocation by the node B. The control information transmitted together with the uplink data is also transmitted according to the resources allocated by the node B. In contrast, since the ACK/NACK is generated based on downlink data, the ACK/NACK is transmitted using an uplink resource automatically allocated according to whether or not the downlink data is transmitted, in response to the control channel defining the downlink data or the downlink data channel. Further, since it is usual that the CQI is periodically transmitted, the CQI is transmitted using a resource determined in advance through setup by higher level signaling.

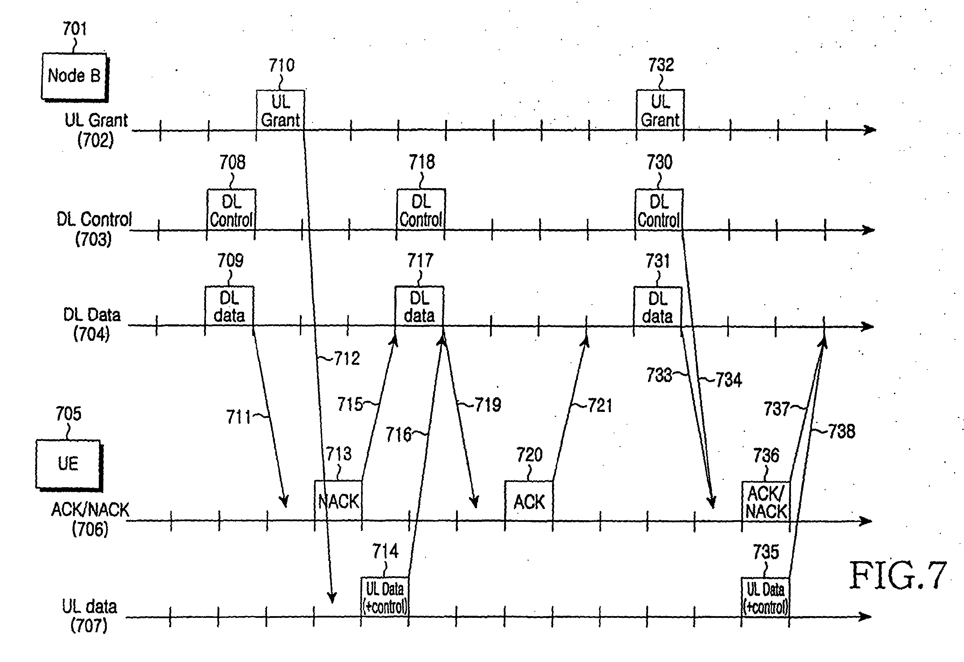

A process for transmitting multiple types of uplink information will be described with reference to FIG. 7. FIG. 7 illustrates a process of signal transmission/reception between a node B and a UE.

Referring to FIG. 7, for communication with the UE 705, the node B 701 may transmit downlink data 704, downlink control information 703 defining a transform format of the downlink data 704, an uplink grant 702 for allocating an uplink resource of the UE according to a result of scheduling, etc. to the UE 705. In contrast, the UE 705 may transmit uplink data 707, and ACK/NACK 706 for supporting an HARQ operation of the downlink data 704 from the node B 701, etc. to the node B 701. Although not shown, the UE 705 may further transmit uplink signaling information such as CQI indicating the channel information. However, the following discussion is mainly based on a case in which ACK/NACK is transmitted as one of a representative uplink signaling information. Of course, control information for the uplink data may be also transmitted together with the uplink data 707. Further, the following discussion can be applied to not only the ACK/NACK but also other uplink signaling information such as CQI or scheduling request information.

In step 711, the node B 701 transmits downlink control information 708 together with downlink data 709. The control information 708 and the downlink data 709 are transmitted at either exactly the same transmission time or nearly similar transmission time. After receiving the downlink control information 708, the UE 705 decodes the downlink data 709 based on the downlink control information 708. Then, the UE 705 informs the node B 701 of if the decoding of the downlink data 709 was successful. Specifically, in step 715, the UE 705 transmits NACK, which implies that the received downlink data has an error.

In step 712, the node B 701 transmits the uplink grant 710, which is resource allocation information for uplink transmission of the UE 705. Upon receiving the uplink grant 710, the UE 705 transmits uplink data 714 together with control information through an uplink resource indicated by the uplink grant 710 in step 716.

The radio resource for transmitting the ACK/NACK 706 must be set in advance. Since the ACK/NACK 706 relates to the transmission of the downlink data 704, the ACK/NACK 706 is transmitted by using either an uplink radio resource mapped to the downlink resource used by the downlink control information 703 or an uplink radio resource mapped to the downlink resource used by the downlink data 704. At this time, the mapping of the radio resource corresponding to the ACK/NACK 706 may change according to time, and it is possible to enable the node B to know the channel statuses corresponding to various sub-carriers, that is, corresponding to detailed frequency bands, by changing the sub-carrier(s) carrying the ACK/NACK 706. In contrast, because the uplink data 707 uses an uplink radio resource directly indicated by the uplink grant 702 transmitted in the downlink by the node B 701, the UE 705 recognizes, by using the uplink grant 702, the uplink radio resource to be used for the uplink data 707.

When the NACK 713 and the uplink data 714 are transmitted at different transmission time as in steps 715 and 716, only one type of uplink information is transmitted at each transmission period. Therefore, the UE 705 can maintain without difficulty the single carrier characteristic of the uplink transmission.

Upon receiving the NACK 713, the node B 701 retransmits downlink data 717 substantially equal to the downlink data 709 according to the HARQ operation in step 719. In step 719, control information of the retransmitted downlink data 717 is transmitted. In step 721, the UE 705 transmits ACK 720 in response to the retransmitted downlink data 717. Then, the HARQ operation for the downlink data 709 and 717 is terminated. In step 721 also, the UE 705 transmits only the ACK 720 without the uplink data. Therefore, the UE 705 can maintain without difficulty the single carrier characteristic of the uplink transmission.

In contrast, if the node B 701 transmits the downlink control information 730 and the downlink data 731 nearly simultaneously with the uplink grant 732 in steps 733 and 734, the UE 705 uplink transmits the ACK/NACK 736 and the uplink data 735 substantially at the same time in steps 737 and 738. The radio resource for the ACK/NACK 736 is determined based on the downlink data 731 or the downlink control information 730 and the radio resource for the uplink data 735 is determined based on the uplink grant 732, and these radio resources are usually divided by the frequency side within one sub-frame. Therefore, in the case where the UE 705 must simultaneously transmit the uplink data 735 and the ACK/NACK 736, it is impossible to contain the two types of information 735 and 736 in one FFT block and it is thus impossible to satisfy the single carrier characteristic of the uplink transmission.

In the uplink transmission, it should be always possible to transmit the ACK/NACK 706 and the uplink data 707 within each sub-frame for the flexibility of the downlink and uplink transmission. Therefore, according to the present invention, the ACK/NACK (that is, uplink signaling information) and the uplink data are time-multiplexed and transmitted within the same frequency resource, in order to always satisfy the single carrier characteristic of the uplink transmission regardless of the transmission of the ACK/NACK and the uplink data within one sub-frame, which is the minimum transmission unit.

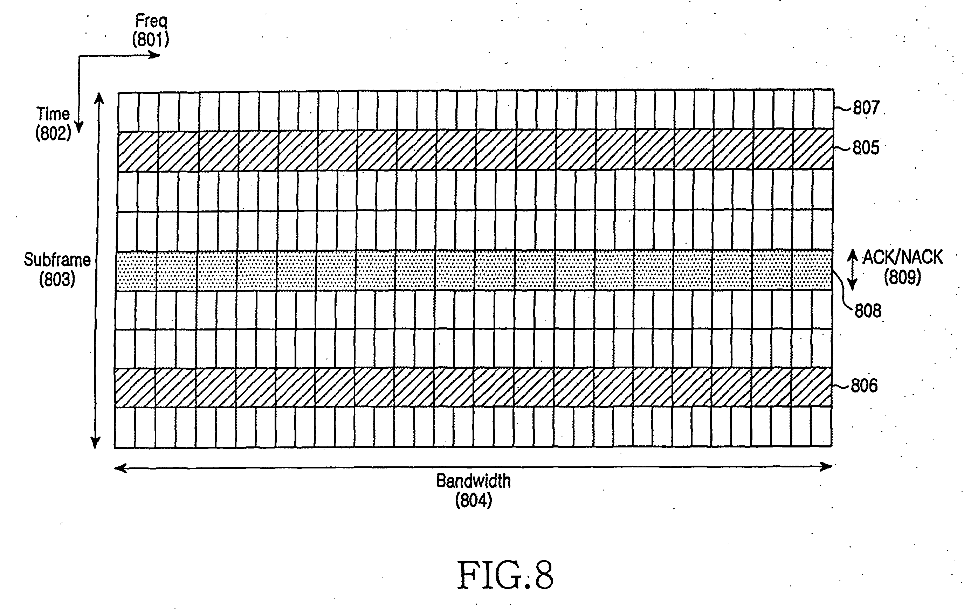

FIG. 8 illustrates a sub-frame structure for time-multiplexing the ACK/NACK and uplink data according to the present invention. In FIG. 8, the horizontal axis corresponds to the frequency domain 801, and the vertical axis corresponds to the time domain 802. The range of the frequency domain 801 corresponds to the entire frequency band 804, and the range of the time domain 802 corresponds to one sub-frame 803. As shown, short blocks 805 and 806 carry pilots, and long blocks 807 carry uplink data and control information defining the transform format of the uplink data except for the pilots.

The ACK/NACK is transmitted through a separate resource (ACK/NACK resource) 808 that is temporally discriminated from the resource (data resource) for the uplink data. The length of the time interval for the ACK/NACK may be the same as the size of each short block or the size of each long block, or may be another size. Further, the ACK/NACK resource may be variably determined according to the used frequency band, etc.

Referring to FIG. 8, short blocks 805 and 806 carry pilots, which are used in channel estimation for radio resources (data resources) of uplink data transmitted through the long blocks 807. When the ACK/NACK is transmitted at a different time point from that of the uplink data, all of the pilots are used for the uplink data and it is impossible to perform the channel estimation for the radio resource (ACK/NACK resource). If the ACK/NACK is restored according to a non-coherent scheme without channel estimation, the transmission performance is degraded in comparison with the case including the channel estimation.

Therefore, according to the present invention, a second pilot for the ACK/NACK having been time-multiplexed with the uplink data within the same sub-frame is used in addition to the first pilot for the uplink data. That is, the present invention additionally uses the second pilot for the ACK/NACK, and frequency hopping may be applied to the second pilot to be used in the uplink channel estimation of the node B. It is of course possible to apply such a technology to not only transmission of the ACK/NACK but also transmission of other uplink signaling information.

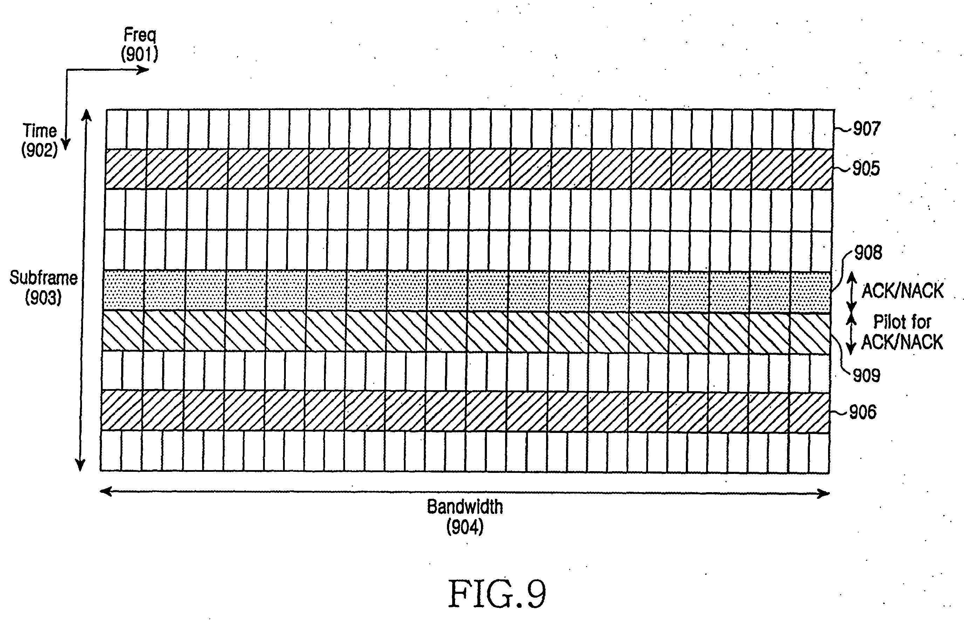

FIG. 9 illustrates a structure of a sub-frame including the second pilot additionally used for the ACK/NACK according to the present invention. In FIG. 9, the horizontal axis corresponds to the frequency domain 901, and the vertical axis corresponds to the time domain 902. The range of the frequency domain 901 corresponds to the entire frequency band 904, and the range of the time domain 902 corresponds to one sub-frame 903.

As shown, short blocks 905 and 906 carry the first pilots, and long blocks 907 carry uplink data and control information defining the transform format of the uplink data.

The ACK/NACK is transmitted through a separate resource (ACK/NACK resource) 908 that is temporally discriminated from the resource (data resource) for the uplink data. The second pilot for estimation of the channel in relation to the ACK/NACK is transmitted to a time resource 909 just adjacent to the ACK/NACK resource 908, thereby reflecting the channel status of the ACK/NACK. Due to the use of the ACK/NACK and the second pilot, one sub-frame may have five or less long blocks.

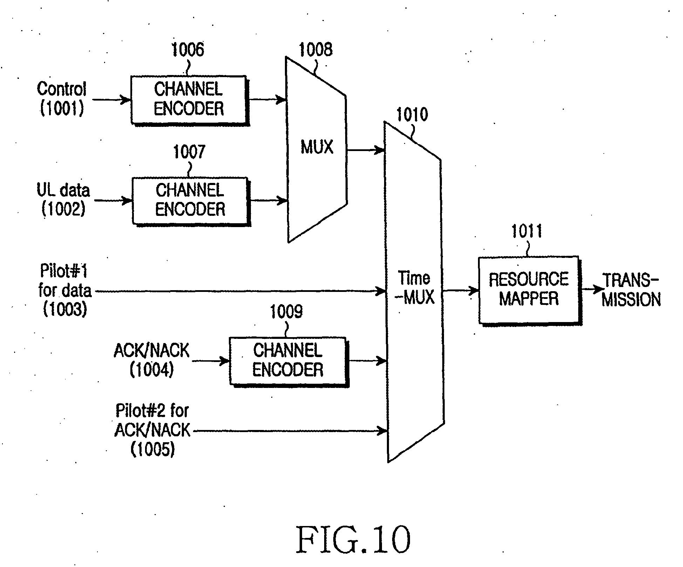

FIG. 10 is a block diagram illustrating a structure of a transmitter (UE) for time-multiplexing data and ACK/NACK according to the present invention.

Referring to FIG. 10, when the UE has uplink data to transmit, the uplink data 1002 and the control information 1001 defining the transmit format of the uplink data 1002 are input to channel encoders 1006 and 1007, and are then input to and multiplexed by a multiplexer 1008. The output of the multiplexer 1008 is input to a time multiplexer 1010. Further, a first pilot 1003 for the uplink data 1002 and/or the control information 1001 is input to the time multiplexer 1010.

When there is ACK/NACK 1004 transmitted by the UE for HARQ operation of downlink data, the ACK/NACK 1004 is subjected to encoding, such as repetition encoding, by a channel encoder 1009, and is then input to the time multiplexer 1010. A second pilot for the ACK/NACK 1004 is also input to the time multiplexer 1010.

The time multiplexer 1010 time-multiplexes the four inputs according to a predetermined sub-frame structure (for example, the structure shown in FIG. 9), and a resource mapper 1011 then maps the multiplexed information to a predetermined resource for transmission. The resource mapper 1011 includes an FFT (or DFT) block, a sub-carrier mapper, and an IFFT block, and the outputs of the resource mapper 1011 are transmitted while maintaining equal intervals between them in the frequency domain.

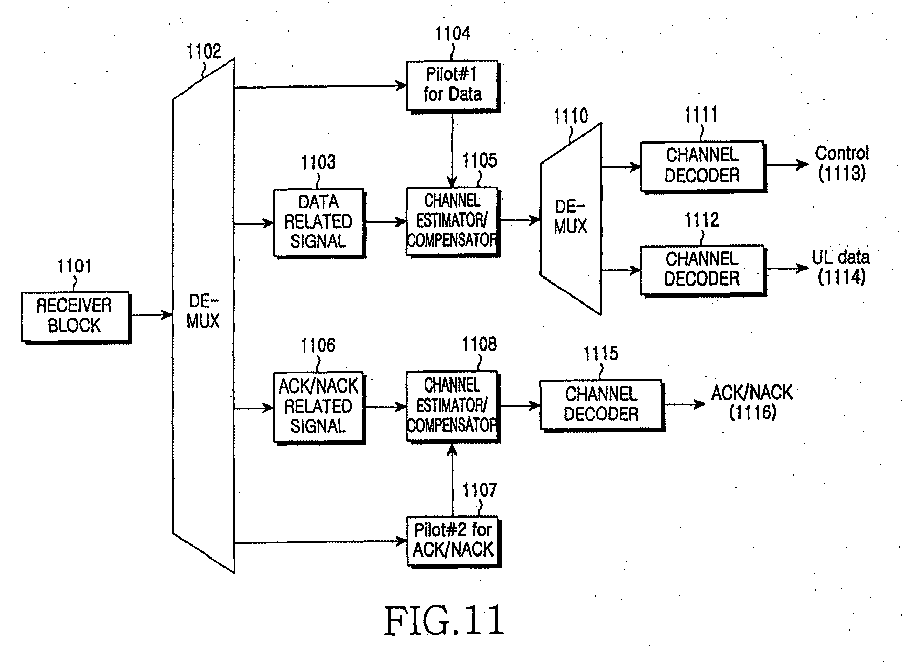

FIG. 11 illustrates a structure of a receiver (node B) for receiving and decoding a radio signal transmitted by the transmitter.

When a receiver block 1101 has received a signal of one sub-frame transmitted by the UE, the received signal is time demultiplexed by a time demultiplexer 1102 according to a predetermined sub-frame structure (for example, the structure shown in FIG. 9). The time demultiplexer 1102 performs an operation inverse to the operation of the resource mapper 1011 of the transmitter. The outputs of the time demultiplexer 1102 include data-related signal 1103, a first pilot 1104 for uplink data, ACK/NACK-related signal 1106, and a second pilot 1107 for the ACK/NACK.

The channel estimator/compensator 1105 performs channel estimation for the data resource by means of the first pilot 1104, and channel-compensates the data-related signal 1103 by means of the channel estimation information. The output of the channel estimator/compensator 1105 is demultiplexed into encoded control information and encoded uplink data by the demultiplexer 1110. The encoded control information and the encoded uplink data are restored to the uplink data 1114 and the control information 1113 by the channel decoders 1111 and 1112.

Further, the channel estimator/compensator 1108 performs channel estimation for the ACK/NACK resource and then performs channel compensation of the ACK/NACK-related signal 1106 by using the channel estimation information. The output of the channel estimator 1108 is decoded by a channel decoder 1115, so that it is restored to the ACK/NACK 1116.

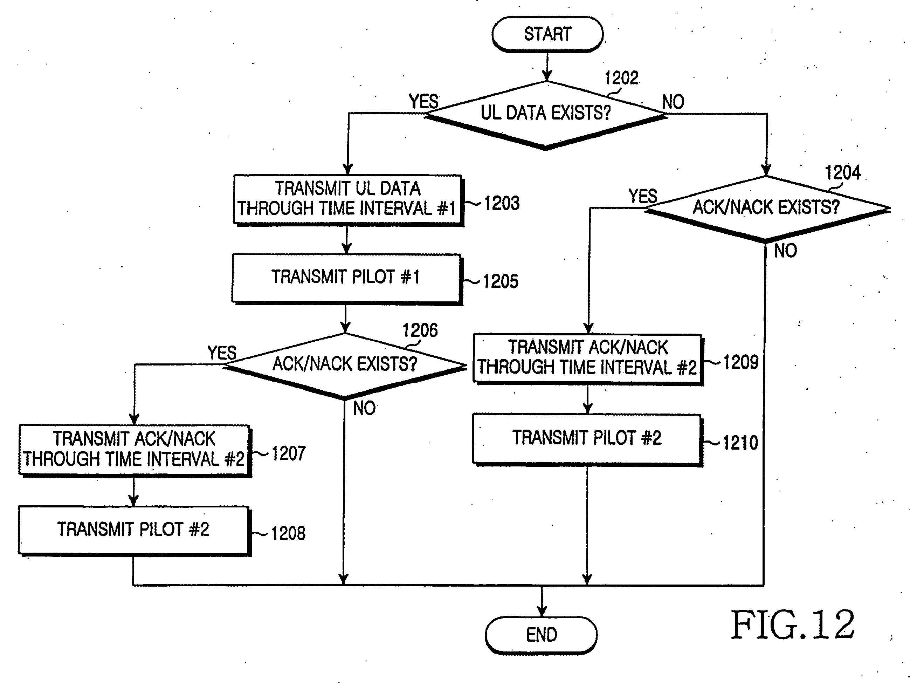

FIG. 12 is a flow diagram illustrating the operation of a transmitter according to the present invention. In the following description, description of the control information for the uplink data is omitted because it is the same as that of the uplink data.

Referring to FIG. 12, the UE determines whether to transmit data in step 1202. Specifically, the UE determines if the UE has data to be transmitted and if there is a data resource available to the UE through scheduling, etc. of a node B. When the determination in step 1202 concludes that there is data to be transmitted, the UE transmits in step 1203 the data after mapping the data to a data resource (907 in FIG. 9), which corresponds to the first time interval of one sub-frame, , and then in step 1205 transmits a first pilot for the data after mapping the first pilot to a time resource (905 and 906 in FIG. 9) adjacent to the first time interval.

After the first pilot, the UE determines in step 1206 if it will transmit ACK/NACK for downlink data, based on the HARQ operation for the downlink data and based on if the downlink data has been normally received. If the determination in step 1206 concludes that there is ACK/NACK to be transmitted, the UE transmits in step 1207 the ACK/NACK after mapping the ACK/NACK to an ACK/NACK resource (908 in FIG. 9), which corresponds to a second time interval different from the first time interval, and transmits in step 1208 the second pilot for the ACK/NACK after mapping the second pilot to a time resource (909 in FIG. 9) adjacent to the second time interval. If the determination in step 1206 concludes that there is no ACK/NACK to be transmitted, no information is transmitted in the second time interval at all.

When the determination in step 1202 concludes that there is no data to be transmitted, the UE determines in step 1204 if there is ACK/NACK to be transmitted. When there is ACK/NACK to be transmitted, the UE transmits in step 1209 the ACK/NACK in the second time interval and transmits in step 1210 the second pilot for the ACK/NACK through the time resource adjacent to the second time interval. In this case, no information is transmitted in the first time interval at all. When there is no ACK/NACK or other uplink signaling information, the operation for the current sub-frame is terminated.

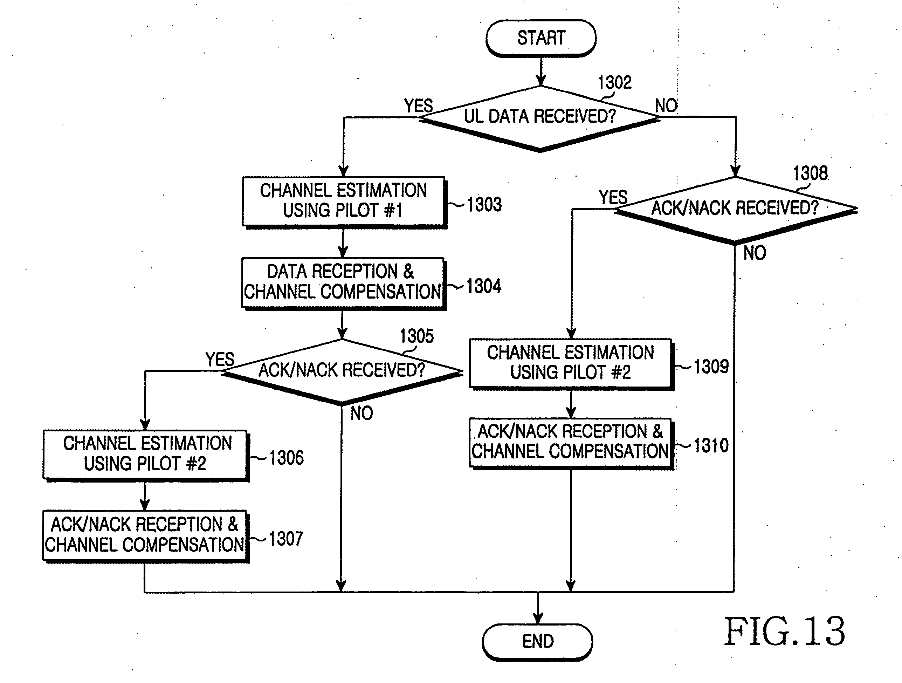

FIG. 13 is a flow diagram of an operation of a receiver according to the present invention. In the following description, description of the control information for the uplink data is omitted because it is the same as that of the uplink data.

Referring to FIG. 13, the node B determines if there is data to receive in step 1302. Specifically, the node B determines if the node B has allocated a data resource to the UE through scheduling, etc. When the determination in step 1302 concludes that there is data to be received, the node B in step 1303 extracts the first pilot from a predetermined time resource block (905 and 906 in FIG. 9) of a received signal during one sub-frame and performs channel estimation of the data resource (the first time interval, 907 in FIG. 9) included in the received signal by using the first pilot. Then, in step 1304, the node B extracts data-related signal corresponding to the first time interval of the received signal, and obtains the data by channel-compensating the data-related signal by using channel estimation information obtained based on the first pilot.

After obtaining the data, the node B determines in step 1305 if the received signal includes ACK/NACK, based on if a resource has been allocated at a previous transmission time point. When the received signal includes ACK/NACK, the node B in step 1306 extracts the second pilot from a predetermined time resource block (909 in FIG. 9), and performs channel estimation of the ACK/NACK resource (that is, the second time interval 908 in FIG. 9) of the received signal by using the second pilot. In step 1307, the node B extracts ACK/NACK-related signal corresponding to the second time interval of the received signal, and obtains the ACK/NACK by channel-compensating the ACK/NACK-related signal by using the channel estimation information obtained from the second pilot.

Meanwhile, when the determination in step 1302 concludes that there is no data to be received, the node B determines in step 1308 if there is ACK/NACK to receive. When there is ACK/NACK to receive, the node B in step 1309 extracts the second pilot from the predetermined time resource block of the received signal and performs channel estimation of the ACK/NACK resource (the second time interval) of the received signal by using the second pilot. In step 1310, the node B extracts ACK/NACK-related signal corresponding to the second time interval of the received signal, and obtains the ACK/NACK by channel-compensating the ACK/NACK-related signal by using the channel estimation information obtained from the second pilot.

Another preferred embodiment of the present invention discussed below considers a case of using a second pilot for the CQI in addition to the first pilot for the uplink data in a situation in which uplink data and the CQI, which is uplink signaling information, are time-multiplexed within a sub-frame. The second pilot for the CQI may be used when the node B additionally determines the uplink channel status and performs uplink scheduling. Therefore, when the second pilot is transmitted by using different sub-carriers at each transmission period instead of always using the same sub-carrier, the node B can obtain a more detailed uplink channel status according to the sub-carriers.

This embodiment provides a scheme of changing sub-carriers carrying the second pilot according to transmission time points for the above-mentioned purpose, that is a scheme for applying frequency hopping. To this end, the frequency hopping is also applied to the CQI. It goes without saying that the frequency hopping transmission of the CQI and a corresponding pilot proposed by the present embodiment can be applied to the transmission of other uplink signaling information as well as the CQI.

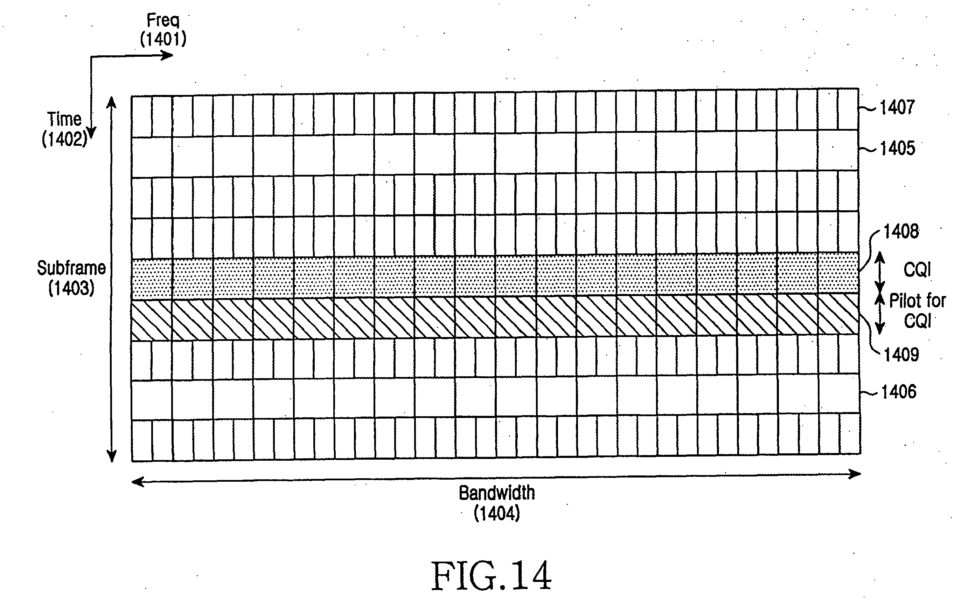

FIG. 14 illustrates a structure of a sub-frame including the second pilot additionally used for the CQI according to an embodiment of the present invention. In FIG. 14, the horizontal axis corresponds to the frequency domain 1401, and the vertical axis corresponds to the time domain 1402. The range of the frequency domain 1401 corresponds to the entire frequency band 1404, and the range of the time domain 1402 corresponds to one sub-frame 1403.

As shown, short blocks 1405 and 1406 carry the first pilots for uplink data, and long blocks 1407 carry the uplink data and control information defining the transform format of the uplink data.

The CQI is transmitted through a separate resource (CQI resource) 1408 that is temporally discriminated from the resource (data resource) for the uplink data. The second pilot for estimation of the channel in relation to the CQI is transmitted to a time resource 1409 just adjacent to the CQI resource 1408, thereby reflecting the channel status of the CQI. Due to the use of the CQI and the second pilot, one sub-frame may have five or less long blocks.

During one sub-frame, the CQI and the second pilot are transmitted by a sub-carrier set including a part of the sub-carriers in the entire frequency band 1404, and the CQI and the second pilot are carried by the same sub-carrier (s). At this time, the second pilot is transmitted according to a distributed transmission scheme, so as to inform the node B of the uplink channel quality for the UE. By using the distributed transmission scheme, it is possible to additionally obtain a frequency diversity effect.

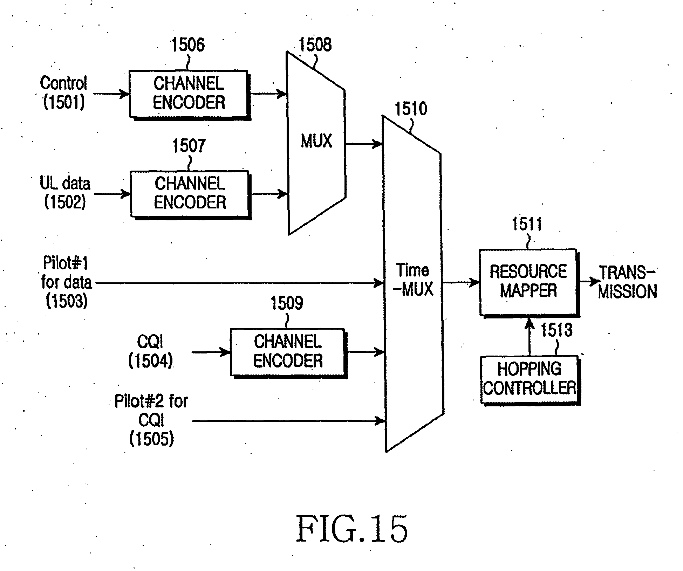

FIG. 15 is a block diagram illustrating a structure of a transmitter (UE) for time multiplexing data and CQI according to an embodiment of the present invention.

Referring to FIG. 15, when the UE has uplink data to transmit, the uplink data 1502 and the control information 1501 defining the transmit format of the uplink data 1502 are input to channel encoders 1506 and 1507, and are then input to and multiplexed by a multiplexer 1508. The output of the multiplexer 1508 is input to a time multiplexer 1510. Further, a first pilot 1503 for the uplink data 1502 and/or the control information 1501 is input to the time multiplexer 1510.

When there is CQI 1504 transmitted by the UE for downlink scheduling, the CQI 1504 is subjected to encoding, such as repetition encoding, by a channel encoder 1509, and is then input to the time multiplexer 1510. A second pilot for the CQI 1504 is also input to the time multiplexer 1510.

The time multiplexer 1510 time-multiplexes the four inputs according to a predetermined sub-frame structure (for example, the structure shown in FIG. 14), and a resource mapper 1511 then transmits the multiplexed information after mapping the multiplexed information to a predetermined resource. By the resource mapper 1511, the CQI 1504 and the second pilot 1505 are mapped to the same sub-carrier (or sub-carrier group). At this time, the CQI 1504 and the second pilot 1505 are mapped to a sub-carrier (or sub-carrier group), which changes according to time by determination of a hopping controller 1513. The frequency hopping as described above is also applied to the second pilot, and the UE can inform the node B of the uplink channel quality in more detail by the frequency hopping of the second pilot 1505. For example, the frequency hopping may be performed according to a time function as defined by Equation (1) below.

$$SC\_i = F(frame\_num, sub\_frame\_num, symbol\_num, Seed) \quad \ldots\ldots (1)$$

In Equation (1), $SC\_i$ denotes an index of a sub-carrier set to which the CQI and the second pilot are mapped, *frame_num* denotes a frame number, *sub_frame_num* denotes a sub-frame number within the frame, *symbol_num* denotes a symbol number within the sub-frame, and *Seed* denotes a predetermined reference value. Further, F() denotes a predetermined function in the system.

In FIG. 15, The resource mapper 1511 includes an FFT (or DFT) block, a sub-carrier mapper, and an IFFT block, as described above with reference to FIG. 2, and the outputs (frequency components) of the resource mapper 1511 are transmitted while maintaining equal intervals (0 or above) between them in the frequency domain.

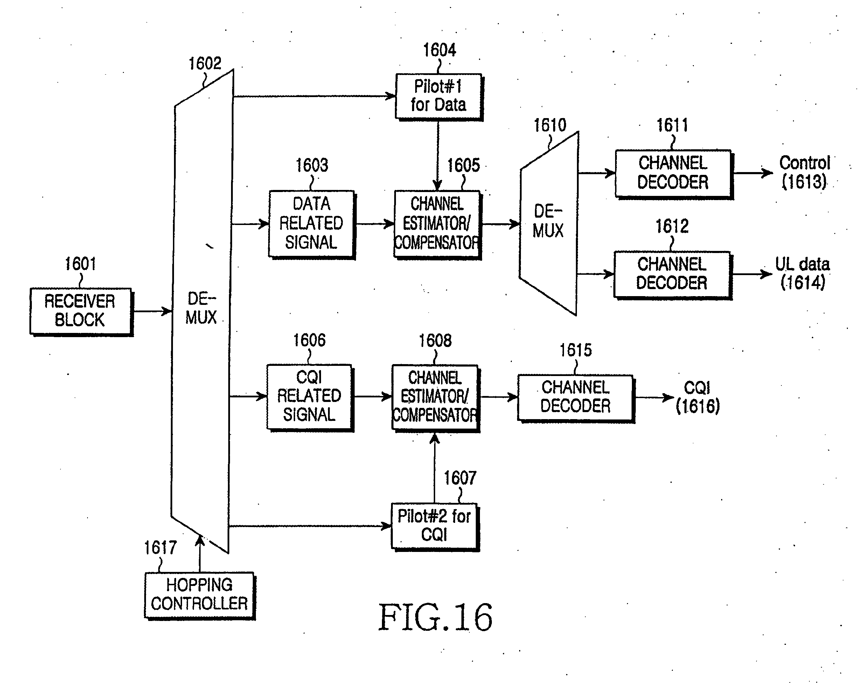

FIG. 16 illustrates a structure of a receiver (node B) for receiving and decoding a radio signal transmitted by the transmitter.

When a receiver block 1601 has received a signal of one sub-frame transmitted by the UE, the received signal is time demultiplexed by a time demultiplexer 1602 according to a predetermined sub-frame structure (for example, the structure shown in FIG. 14). The time demultiplexer 1602 performs an operation inverse to the operation of the resource mapper 1511 of the transmitter. The outputs of the time demultiplexer 1602 include data-related signal 1603, a first pilot 1604 for uplink data, CQI-related signal 1606, and a second pilot 1607 for the CQI.

The time demultiplexer 1602 performs frequency hopping for the CQI 1606 and the second pilot 1607, and the hopping controller 1617 controls the time demultiplexer 1602. That is, the time demultiplexer 1602 detects a sub-carrier group determined at each transmission time point by the hopping controller 1617, and detects the CQI-related signal 1606 and the second pilot 1607 from the detected sub-carrier group.

The channel estimator/compensator 1605 performs channel estimation for the data resource by means of the first pilot 1604, and channel-compensates the data-related signal 1603 by means of the channel estimation information. The output of the channel estimator/compensator 1605 is demultiplexed into encoded control information and encoded uplink data by the demultiplexer 1610. The encoded control information and the encoded uplink data are restored to the uplink data 1614 and the control information 1613 by the channel decoders 1611 and 1612.

The channel estimator/compensator 1608 performs channel estimation for the CQI resource and then performs channel compensation of the CQI-related signal 1606 by using the channel estimation information. The output of the channel estimator 1608 is decoded by a channel decoder 1615, so that it is restored to the CQI 1616.

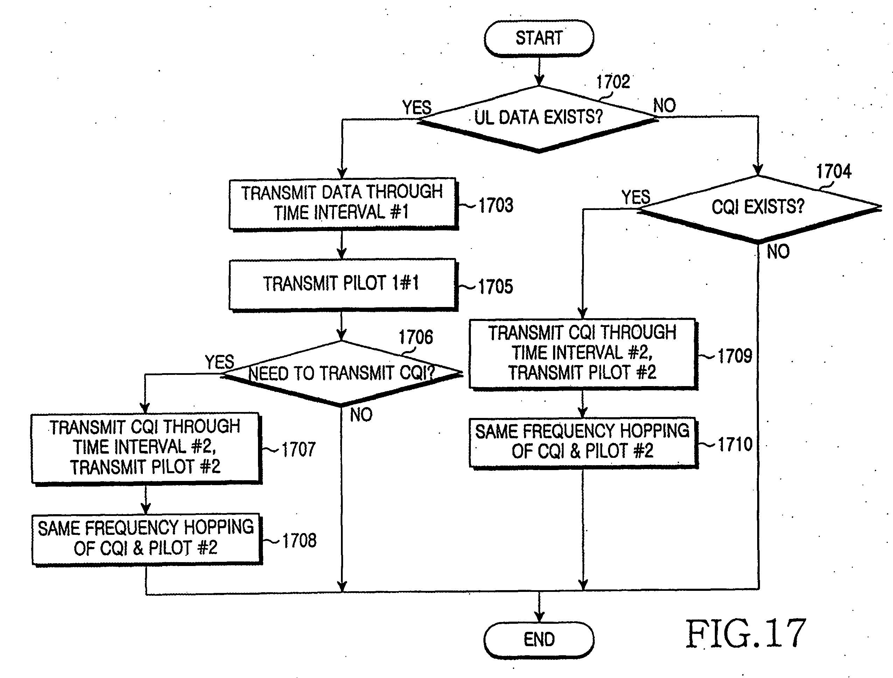

FIG. 17 is a flow diagram illustrating the operation of a transmitter according to an embodiment of the present invention. In the following description, description of the control information for the uplink data is omitted because it is the same as that of the uplink data.

Referring to FIG. 17, the UE determines whether to transmit data in step 1702. Specifically, the UE determines if the UE has data to be transmitted and if there is a data resource allocated to the UE through scheduling, etc. of a node B. When the determination in step 1702 concludes that there is data to be transmitted, the UE in step 1703 transmits the data after mapping the data to a data resource (1407 in FIG. 14), which corresponds to the first time interval of one sub-frame, , and then in step 1705 transmits a first pilot for the data after mapping the first pilot to a time resource (1405 and 1406 in FIG. 14) adjacent to the first time interval.

After transmitting the first pilot, the UE determines in step 1706 if it will transmit CQI for downlink data, based on a predetermined CQI period. If the determination in step 1706 concludes that there is CQI to be transmitted, the UE in step 1707 transmits the CQI after mapping the CQI to a CQI resource (1408 in FIG. 14), which corresponds to a second time interval different from the first time interval, and in step 1708 transmits the second pilot for the CQI after mapping the second pilot to a time resource (1409 in FIG 14) adjacent to the second time interval. If the determination in step 1706 concludes that there is no CQI to be transmitted, no information is transmitted in the second time interval at all.

When the determination in step 1702 concludes that there is no data to be transmitted, the UE in step 1709 determines in step 1704 if there is CQI to be transmitted. When there is CQI to be transmitted, the UE transmits the CQI in the second time interval and in step 1710 transmits the second pilot for the CQI through the time resource adjacent to the second time interval. In this case, no information is transmitted in the first time interval at all. When there is no CQI to be transmitted or other uplink signaling information, the operation for the current sub-frame is terminated.

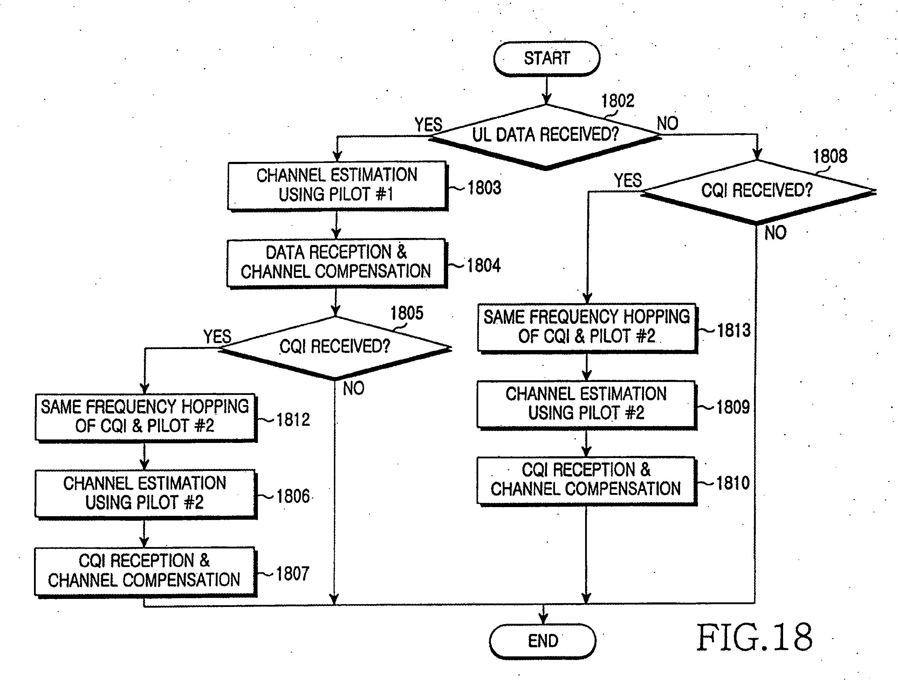

FIG. 18 is a flow diagram of an operation of a receiver according to an embodiment of the present invention. In the following description, a description of the control information for the uplink data is omitted because it is the same as that of the uplink data.

Referring to FIG. 18, the node B determines if there is data to receive in step 1802. Specifically, the node B determines if the node B has allocated a data resource to the UE through scheduling, etc. When the determination in step 1802 concludes that there is data to be received, the node B in step 1803 extracts the first pilot from a predetermined time resource block (1405 and 1406 in FIG. 14) of a received signal during one sub-frame and performs channel estimation of the data resource (the first time interval, 1407 in FIG. 14) included in the received signal by using the first pilot. Then, in step 1804, the node B extracts data-related signal corresponding to the first time interval of the received signal, and obtains the data by channel-compensating the data-related signal by using channel estimation information obtained based on the first pilot.

After obtaining the data, the node B determines in step 1805 if the received signal includes CQI, according to the predetermined CQI period. When the received signal includes CQI, the node B in step 1812 determines the position of the frequency resource for reading the CQI and the second pilot through frequency hopping of the CQI and the second pilot, and extracts the second pilot from a predetermined time resource block (1409 in FIG. 14) of the determined frequency domain and in step 1806 performs channel estimation of the CQI resource (that is, the second time interval 1408 in FIG. 14) of the received signal by using the second pilot.

In step 1806, the node B recognizes the uplink channel quality from the second pilot and uses the information of uplink channel quality in uplink scheduling. That is, the node B can determine the reception reliability of the CQI based on the channel quality of the CQI resource, can determine the uplink channel quality from the reception reliability of the CQI, and can use the uplink channel quality in uplink scheduling.

Then, in step 1807, the node B extracts CQI-related signal from the second time interval of the received signal, and channel-compensates the extracted CQI-related signal by using the CQI-related signal obtained from the second pilot, thereby obtaining the CQI. The CQI can be used in uplink scheduling.

Meanwhile, when the determination in step 1802 concludes that there is no data to be received, the node B determines in step 1808 if there is CQI to receive. When there is CQI to receive, the node B in step 1813 determines the position of the frequency resource for reading the CQI and the second pilot through frequency hopping of the CQI and the second pilot, and extracts the second pilot from a predetermined time resource block of the determined frequency domain and in step 1809 performs channel estimation of the CQI resource (that is, the second time interval) of the received signal by using the second pilot. Then, in step 1810, the node B extracts CQI-related signal from the second time interval of the received signal, and channel-compensates the extracted CQI-related signal by using the CQI-related signal obtained from the second pilot, thereby obtaining the CQI.

The present invention presents schemes for multiplexing and resource mapping of uplink data and uplink signaling information, in order to satisfy the single sub-carrier characteristic in transmission of the uplink data and uplink signaling information in a Single Carrier Frequency Division Multiple Access (SC-FDMA) wireless communication system. The present invention provides a time multiplexing scheme and a pilot structure thereof, which can eliminate factors disturbing the single carrier transmission requirement and prevent PAPR increase, which may occur when uplink data and uplink signaling information such as ACK/NACK and CQI are transmitted without relation to each other. Further, the present invention provides a scheme for frequency hopping of the uplink control information and the pilot, in order to enhance the performance of the channel estimation by using an additional pilot.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method for transmitting multiple types of uplink information in a Single Carrier Frequency Division Multiple Access (SC-FDMA) wireless communication system, the method comprising the steps of:

   when there is uplink data to be transmitted, determining if there is uplink signaling information to be transmitted;
   when there is no uplink signaling information, time-multiplexing the uplink data and a first pilot for the uplink data and transmitting the multiplexed uplink data and first pilot; and
   when there exists the uplink signaling information, time-multiplexing the uplink data, the first pilot for the uplink data, and a second pilot for the uplink data and the uplink signaling information, and transmitting the multiplexed uplink data, first pilot, and second pilot.

2. The method as claimed in claim 1, wherein the second pilot is transmitted temporally adjacent to the uplink signaling information.

3. The method as claimed in claim 1, further comprising performing frequency hopping in order to determine a position of a sub-carrier set within the frequency resource, wherein the sub-carrier set is used to carry both the uplink signaling information and the second pilot.

4. The method as claimed in claim 1, wherein the uplink signaling information comprises at least one of a Channel Quality Indicator (CQI), which periodically occurs in order to indicate a status of a channel, a ACK/NACK, which indicates success or failure in reception of downlink data, and scheduling request information.

5. An apparatus for transmitting multiple types of uplink information in a Single Carrier Frequency Division Multiple Access (SC-FDMA) wireless communication system, the apparatus comprising:

   a multiplexer for time multiplexing uplink data and a first pilot for the uplink data when there is uplink data to be transmitted and there is no uplink signaling information, and time multiplexing the uplink data, the first pilot for the uplink data, and a second pilot for the uplink data and the uplink signaling information when there is both the uplink signaling information and the uplink signaling information; and
   a resource mapper for transmitting an output of the multiplexer after mapping the output of the multiplexer to a frequency resource.

6. The apparatus as claimed in claim 5, wherein the second pilot is transmitted temporally adjacent to the uplink signaling information.

7. The apparatus as claimed in claim 5, further comprising a hopping controller for performing frequency hopping in order to determine a position of a sub-carrier set within the frequency resource, wherein the sub-carrier set is used to carry both the uplink signaling information and the second pilot.

8. The apparatus as claimed in claim 5, wherein the uplink signaling information includes at least one of a Channel Quality Indicator (CQI), which periodically occurs in order to indicate a status of a channel, a ACK/NACK, which indicates success or failure in reception of downlink data, and scheduling request information.

9. A method for receiving multiple types of uplink information in a Single Carrier Frequency Division Multiple Access (SC-FDMA) wireless communication system, the method comprising the steps of:

   receiving from an user equipment (UE) a radio signal through a frequency resource;
   time-demultiplexing the radio signal into uplink data-related signal, a first pilot, uplink signaling-related signal, and a second pilot;
   channel-compensating the uplink data-related signal by using the first pilot;
   decoding the channel-compensated uplink data-related signal and outputting uplink data;
   channel-compensating the uplink signaling-related signal by using the second pilot; and
   decoding the channel-compensated uplink signaling-related signal and outputting uplink signaling information.

10. The method as claimed in claim 9, wherein the second pilot is received temporally adjacent to the uplink signaling information.

**11.** The method as claimed in claim 9, further comprising performing frequency hopping in order to determine a position of a sub-carrier set within the frequency resource, wherein the sub-carrier set is used to read the uplink signaling information and the second pilot.

**12.** The method as claimed in claim 9, wherein the uplink signaling information comprises at least one of a Channel Quality Indicator (CQI), which periodically occurs in order to indicate a status of a channel, a ACK/NACK, which indicates success or failure in reception of downlink data, and scheduling request information.

**13.** An apparatus for receiving multiple types of uplink information in a Single Carrier Frequency Division Multiple Access (SC-FDMA) wireless communication system, the apparatus comprising:

a receiver block for receiving from an user equipment (UE) a radio signal through a frequency resource;
a first demultiplexer for time-demultiplexing the radio signal into uplink data-related signal, a first pilot, uplink signaling-related signal, and a second pilot;
a first channel estimator/compensator for channel-compensating the uplink data-related signal by using the first pilot;
a first channel decoder for decoding the channel-compensated uplink data-related signal and outputting uplink data;
a second channel estimator/compensator for channel-compensating the uplink signaling-related signal by using the second pilot; and
a second channel decoder for decoding the channel-compensated uplink signaling-related signal and outputting uplink signaling information.

**14.** The apparatus as claimed in claim 13, wherein the second pilot is received temporally adjacent to the uplink signaling information.

**15.** The apparatus as claimed in claim 13, further comprising a hopping controller for controlling the first demultiplexer by performing frequency hopping in order to determine a position of a sub-carrier set within the frequency resource, wherein the sub-carrier set is used to read the uplink signaling information and the second pilot.

**16.** The apparatus as claimed in claim 13, wherein the uplink signaling information comprises at least one of a Channel Quality Indicator (CQI), which periodically occurs in order to indicate a status of a channel, a ACK/NACK, which indicates success or failure in reception of downlink data, and scheduling request information.

FIG.1

EP 1 806 867 A2

EP 1 806 867 A2

Info → **CHANNEL ENCODER** `201` → **MOD** `202` → **S/P** `203` → **FFT** `204` → **MAPPER** `205` →

→ **IFFT** `206` → **P/S** `207` → **CP INSERTER** `208` → Tx

## FIG.2

302 303 304

301

FFT

Sub-carrier
Mapping

IFFT

FIG.3

IFDMA

System bandwidth

frequency

(a)

LFDMA

System bandwidth

frequency

(b)

FIG.4

## FIG.5

EP 1 806 867 A2

EP 1 806 867 A2

FIG.6

FIG.7

FIG.8

907
905
908
ACK/NACK
Pilot for ACK/NACK
909
906

Freq (901)
Time (902)
Subframe (903)
Bandwidth (904)

FIG.9

21

FIG.10

FIG.11

EP 1 806 867 A2

```
                          ┌─────────┐
                          │  START  │
                          └────┬────┘
                               │
                          ╱────┴────╲  1202
                   YES  ╱  UL DATA    ╲  NO
              ┌───────╱   EXISTS?      ╲───────┐
              │       ╲                ╱        │
              │        ╲──────┬──────╱          │
              ▼                                 ▼
   ┌──────────────────────┐            ╱───────────────╲  1204
   │   TRANSMIT UL DATA    │     YES  ╱                 ╲  NO
   │ THROUGH TIME INTERVAL │──1203 ┌─╱  ACK/NACK EXISTS? ╲──┐
   │         #1            │       │ ╲                   ╱  │
   └──────────┬───────────┘        │  ╲────────────────╱   │
              ▼                     │                       │
   ┌──────────────────────┐        ▼                        │
   │   TRANSMIT PILOT #1   │──1205  ┌────────────────────┐   │
   └──────────┬───────────┘        │  TRANSMIT ACK/NACK  │   │
              ▼                     │ THROUGH TIME        │──1209
        ╱──────────╲  1206          │  INTERVAL #2        │   │
  YES ╱             ╲  NO           └──────────┬─────────┘   │
  ┌──╱ ACK/NACK EXISTS?╲──┐                    ▼              │
  │  ╲                ╱   │         ┌────────────────────┐   │
  │   ╲──────────────╱    │         │  TRANSMIT PILOT #2  │──1210
  ▼                       │         └──────────┬─────────┘   │
┌────────────────────┐    │                    │              │
│  TRANSMIT ACK/NACK  │    │                    │              │
│ THROUGH TIME        │──1207                   │              │
│  INTERVAL #2        │    │                    │              │
└──────────┬─────────┘    │                    │              │
           ▼              │                    │              │
┌────────────────────┐    │                    │              │
│  TRANSMIT PILOT #2  │──1208                   │              │
└──────────┬─────────┘    │                    │              │
           │              │                    │              │
           └──────────────┴────────┬───────────┴──────────────┘
                                   ▼
                              ┌─────────┐
                              │   END   │
                              └─────────┘
```

FIG.12

EP 1 806 867 A2

FIG.13

FIG.14

FIG.15

FIG.16

FIG.17

FIG.18